# EUROPÄISCHE PATENTSCHRIFT

(11) **EP 2 400 874 B1**
(45) Veröffentlichungstag und Bekanntmachung des Hinweises auf die Patenterteilung: **01.05.2013**
(21) Anmeldenummer: 10704559.3
(22) Anmeldetag: 16.02.2010
(51) Int. Cl.: A47J 31/44, B29C 45/14

(54) **KAFFEEAUTOMAT**
AUTOMATIC COFFEE MAKER
MACHINE AUTOMATIQUE À CAFÉ

(30) Priorität: 26.02.2009 DE 102009001199
(43) Veröffentlichungstag der Anmeldung: 04.01.2012
(73) Patentinhaber: BSH Bosch und Siemens Hausgeräte GmbH, 81739 München (DE)
(72) Erfinder: KRAMER, Siegmund, 83417 Kirchanschöring (DE)
(86) Internationale Anmeldenummer: PCT/EP2010/051934
(87) Internationale Veröffentlichungsnummer: WO 2010/097313

(56) Entgegenhaltungen:
- EP-A1- 0 528 757
- EP-A1- 0 538 191
- EP-A2- 0 645 771

## Beschreibung

Die Erfindung betrifft einen Kaffeeautomaten mit einem Automatengehäuse und einer darin angeordneten Brüheinheit als Funktionseinheit des Kaffeeautomaten mit mindestens zwei im Wesentlichen parallel angeordneten Trägerelementen und daran angeordneten Kunststofffunktionselementen

Kaffeeautomaten bzw. Kaffeevollautomaten werden üblicherweise durch Assemblierung von separaten Funktionseinheiten innerhalb eines Automatengehäuses aufgebaut. Funktionseinheiten sind beispielsweise die Mahleinheit und die Brüheinheit. Sie werden als separat voneinander angeordnete und entnehmbare Einheiten ausgebildet, weil sie dadurch einfacher zu warten sind. Neben den entnehmbaren Funktionseinheiten existieren noch fest eingebaute, die keiner regelmäßigen Wartung unterliegen, wie zum Beispiel ein Motor. Die entnehmbaren Funktionseinheiten umfassen Trägerelemente, die einzelne Wandungen, ein Skelett oder ein komplettes Gehäuse der Funktionseinheit bilden können. An ihnen sind Funktionselemente aus Kunststoff angebracht, die feststehende oder bewegliche Teile der Funktionseinheiten tragen. Beispiele für Kunststofffunktionselemente sind Gelenkbolzen oder Führungsschienen für eine Kniehebelmechanik zur Verschiebung der Brühkammer oder Befestigungszapfen der Mahleinheit. Die EP 0 538 191 A1 offenbart beispielsweise eine Kaffeemaschine mit einer Brüheinheit.

Die Trägerelemente und die Funktionselemente werden üblicherweise im Guss- oder Extrusionsverfahren hergestellt. Bei der Herstellung der Trägerelemente werden die Funktionselemente durch entsprechende Formgebung angeformt. Sie bestehen daher aus demselben Material wie die Trägerelemente.

Die Funktionen eines Gehäuses, nämlich Stabilisieren und Abschließen einer Funktionseinheit nach außen hin, in Kombination mit den in Brüh- und Mahlvorgängen auftretenden Temperaturen, Kräften, Drücken und Bewegungen, erfordern einen möglichst formstabilen und temperaturbeständigen Kunststoff für das Gehäuse. Dagegen können die Anforderungen an die Funktionselemente davon stark abweichen. So können beispielsweise Kunststoffelemente vorgesehen sein, entlang derer weitere Elemente hin-und herbewegt bzw. bewegt werden. Die Anforderungen an das Material eines solchen Kunststoffelements bestehen dann im Wesentlichen darin, ein möglichst verschleißarmes Gleiten zu gewährleisten. Die Formstabilität hingegen spielt bei einem solchen Kunstsioftelement eine eher untergeordnete Rolle.

Die Trägerelemente mit den daran angebrachten Kunststofffunktionselementen werden daher aus Materialien ausgebildet, die zum Beispiel möglichst gute Lagereigenschaften bei einer möglichst hohen Form- und Temperaturstabilität bieten. Die Auswahl an dafür geeigneten Materialien ist gering, ihr Einsatz teuer. Bei günstigeren Materialien kann der Materialverschleiß aufgrund von Reibung höher ausfallen und die Form- und Temperaturstabilität der Funktionseinheiten reduziert sein, wodurch der Kaffeeautomat eine erhöhte Verschleißentwicklung zeigen kann. An Trägerelemente angespritzte Kunstoffformteile (Outsert-Technik) sind beispielsweise aus der EP 0645 711 A2 bekannt.

Aufgabe der Erfindung ist es daher, einen Kaffeeautomaten mit einem Automatengehäuse und einer darin angeordneten Brüheinheit mit einer geringen Toleranz anzugeben.

Die Aufgabe wird erfindungsgemäß gelöst durch einen Kaffeeautomaten gemäß Patentanspruch 1. Die Erfindung wendet sich davon ab, unterschiedliche Anforderungen durch dasselbe Material erfüllen zu wollen und damit den Anforderungen nicht gerecht zu werden. Sie verfolgt dagegen das Prinzip, für unterschiedliche Anforderungen unterschiedliche und optimale Materialien einzusetzen. Daher werden die Funktionselemente und das Trägerelement nicht mehr gemeinsam hergestellt. Stattdessen werden die Funktionselemente in einem separaten Herstellungsschritt am Trägerelement angebracht bzw. angespritzt. Das Trägerelement, das sich im Wesentlichen in einer Erstreckungsebene ausdehnt, kann beispielsweise eine flache, plattenartige Seitenwand einer Brüheinheit darstellen. Sie soll in der Regel über eine hohe Form- und gegebenenfalls Temperaturstabilität verfügen. Sie ist daher aus einem entsprechenden, dafür optimal geeigneten Metall ausgebildet. Daran angeformte Kunststofffunktionselemente, die beispielsweise besonders gute Gleiteigenschaften aufweisen müssen, sind am Trägerelement durch Anspritzen aus einem geeigneten Kunststoff ausgebildet .

Die Erfindung bedient sich also der so genannten Outsert-Technik, bei der Kunststoffelemente an im Allgemeinen flache Trägerelemente angespritzt werden. Hierdurch können unterschiedliche Materialien für die Einzelbestandteile eines einstückigen Bauteils verwendet und diese dadurch materialmäßig an ihre jeweiligen Funktionsanforderungen besonders gut angepasst werden. Es kann zur Ausbildung einer Gehäusewand mit voll- oder teilflächigen Verblendungen aus Kunststoff oder anderen Materialien versehen oder auch komplett ummantelt sein.

Durch die Erfindung ergibt sich insbesondere der Effekt, dass tragende Elemente Brüheinheit besonders form- und temperaturstabil ausbildbar sind und daher eine Verringerung der Toleranzen die Folge ist. Gleichzeitig kann durch die geeignete Auswahl des Materials der Kunststoffelemente eine Verbesserung der Gleit- bzw. Lagereigenschaften erzielt werden, wodurch sich insgesamt eine deutliche Erhöhung der Stabilität, Präzision und Lebensdauer des Kaffeeautomaten bzw. der so gebildeten Brüheinheit ergibt. So ist bei einer Brüheinheit, die mit Hilfe des erfindungsgemäßen Anspritzens von Kunststoffelementen an ein Trägerelement hergestellt ist, davon auszugehen, dass sich die Lebensdauer aufgrund der höheren Präzision und besseren Verarbeitung verdoppelt bis verdreifacht.

Erfindungsgemäß wird daher eine Brüheinheit als Funktionseinheit eines Kaffeeautomaten mit mindestens zwei im Wesentlichen parallel angeordneten Trägerelementen aus Metallblech ausgebildet, an die die Kunststoffelemente zumindest teilweise angespritzt sind. Die Erfindung umfasst folglich eine entsprechend aufgebaute Brüheinheit eines Kaffeeautomaten. Die Verwendung der Outsert-Technik zur Herstellung von Brüheinheiten ist insofern besonders vorteilhaft, als Brüheinheiten innerhalb eines Kaffeeautomaten sehr starken Beanspruchungen durch hohe Temperaturen und Drücke ausgesetzt sind. Zugleich werden innerhalb von Brüheinheiten einzelne Funktionselemente auch mechanisch stark beansprucht, im Speziellen durch Gleiten einzelner Kunststoffelemente aneinander oder ineinander. Die Stabilitätseigenschaften des Trägerelements sind in diesem Einsatzbereich besonders wichtig, weil sie zu sehr engen Toleranzen führten, die Verschleiß vermindern und die Lebensdauer erhöhen. Beides können ebenso die Gleiteigenschaften der Funktionselemente bewirken.

Das Trägerelement muss in erster Linie besonders steif und temperaturbeständig sein. Erfindungsgemäss ist ein Trägerelement aus Metallblech. Im Vergleich zu Kunststoffen weisen Metalle eine nochmals deutlich erhöhte Form- und Temperaturstabilität auf, so dass Toleranzen eher im Promille-Bereich als im Prozent-Bereich anzusiedeln sind. Dies macht Metallbleche besonders geeignet zur Ausgestaltung der erfindungsgemäßen Anordnung des Kaffeeautomaten bzw. der Brüheinheit. Besonders geeignet sind Metallbleche aus Stahl, insbesondere rostfreiem Stahl, da sie besonders stabil und im letzteren Falle auch den Gegebenheiten in feuchter Umgebung einer Kaffeemaschine problemlos gewachsen sind.

Eine weitere besonders bevorzugte Ausführungsform besteht darin, dass das Trägerelement Aussparungen aufweist, wobei in mindestens eine der Aussparungen ein Funktionselement eingespritzt ist. Durch das Einspritzen in Aussparungen wird das Funktionselement zusätzlich im Trägerelement verankert. Dies erhöht die Stabilität der Verbindung zwischen dem Funktionselement und dem Trägerelement, und gleichzeitig können Toleranzen weiter verringert werden. Letzteres erfolgt im Wesentlichen dadurch, dass durch die Aussparungen im Trägerelement genau definiert wird, an welcher Stelle das Funktionselement im Verbund Trägerelement / Funktionselement angebracht ist.

Zusätzlich kann das Trägerelement aus seiner Erstreckungsebene herausstehende Formelemente aufweisen. Hierbei kann es sich beispielsweise um Sicken und Haken handeln, jedoch auch um andere Formelemente, die winkelig von der Erstreckungsebene abstehen und der Stabilisierung des Trägerelements und/oder der Befestigung von anderen Funktionselementen am Trägerelement dienen. Sicken beispielsweise bilden eine zusätzliche Versteifung des Trägerelements, während herausstehende Haken dazu genutzt werden können, Funktionselemente daran aufzuhängen.

Erfindungsgemäß weist ein Kaffeeautomat der erfindungsgemäßen Art mindestens zwei im Wesentlichen parallel zueinander angeordnete Trägerelemente auf, deren angespritzte Funktionselemente aufeinander zuweisen und komplementär zueinander ausgebildet sind. Eine solche komplementäre Ausbildung besteht beispielsweise darin, dass sie sich gegenseitig in ihrer Funktion ergänzen und/oder eine zusammengesetzte Form bilden. So kann beispielsweise ein Paar von Funktionselementen auf zwei parallel angeordneten Trägerelementen so ausgebildet sein, dass sie gemeinsam Führungselemente für ein darin bewegbares anderes Funktionsteil bilden. Die beiden komplementären Trägerelemente können vorzugsweise die parallelen Außenbegrenzungen des Gehäuses des Kaffeeautomaten und/oder der jeweiligen Funktionseinheit in mindestens einer Richtung bilden. Dazwischen sind die miteinander zusammenwirkenden Funktionselemente angeordnet, die beispielsweise auch die beiden Trägerelemente miteinander verbinden können. Das Gehäuse des Kaffeeautomaten bzw. einer Funktionseinheit kann somit dadurch gebildet sein, dass zwei parallele, jeweils eine Außenwand des Gehäuses bildende Trägerelemente durch die angespritzten Funktionselemente miteinander verbunden sind, wobei die Funktionselemente die restlichen Außenwände des Gehäuses bilden.

Grundsätzlich ist die Auswahl des Kunststoff-Materials der Funktionselemente beliebig auszuführen und im Wesentlichen vom Einsatzzweck der Funktionselemente abhängig. Besonders bevorzugt bestehen sie aus Polyoxymethylen (POM) und/oder Polycarbonat. POM weist eine seifige bis speckige Haptik auf, ist elastisch und daher besonders gut in seinen Gleit- bzw. Lagereigenschaften. Eine vollstückige Ausführung eines größeren Bauteils aus POM ist aufgrund der Materialkosten kaum wirtschaftlich realisierbar. Da POM im Rahmen der Erfindung aber besonders effektiv, da punktuell, eingesetzt wird, können die Materialkosten und der Herstellungsaufwand in erfreulich engen Grenzen gehalten werden. Wegen seiner geringen Temperaturstabilität und Rissempfindlichkeit war bisher auch Polycarbonat nur sehr eingeschränkt in Kaffeeautomaten verwendbar, obwohl es ebenfalls sehr gute Gleiteigenschaften aufweist. Die Erfindung ermöglicht also die Verwendung bisher nur selten genutzter, obwohl technisch teilweise sehr vorteilhafter, Materialien in einem deutlich breiteren Anwendungsspektrum.

Das Prinzip der Erfindung wird im Folgen anhand einer Zeichnung beispielshalber noch näher erläutert. In der Zeichnung zeigen:
- Figur 1: eine frontale Draufsicht auf ein Trägerelement zur Verwendung im Rahmen eis erfindungsgemäßen Kaffeeautomaten,
- Figur 2: ein Formbauteil in schrägperspektivischer Ansicht zur Herstellung einer erfindungsgemäßen Brüheinheit,
- Figur 3: eine erfindungsgemäße Brüheinheit in perspektivischer Ansicht von der Unterseite her.

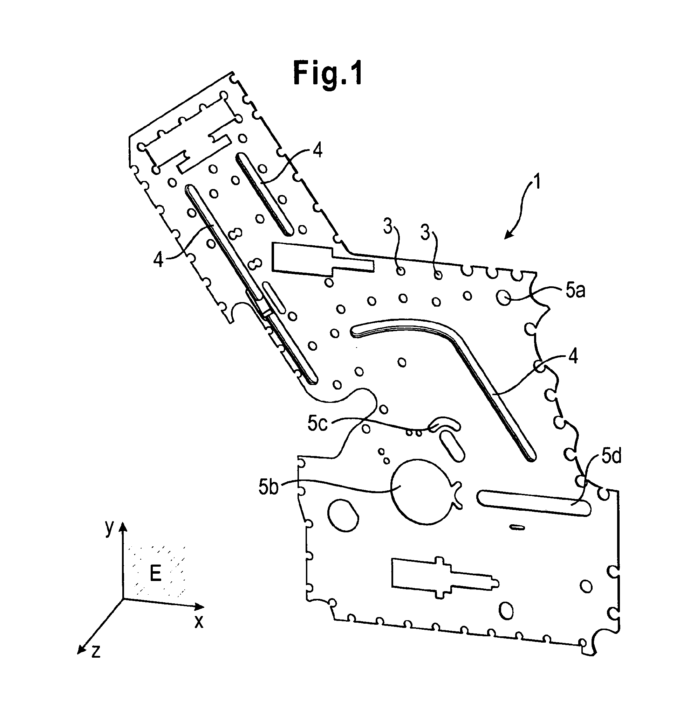

Figur 1 zeigt ein Trägerelement 1, welches aus einem Metallblech geformt ist. Es hat im Wesentlichen die Form einer Wandungsseite einer Brüheinheit eines Kaffeeautomaten. Zur Stabilisierung weist es mehrere längliche Sicken 4 auf, die es in seiner Haupterstreckungsrichtung (im Bild die Diagonale von rechts unten nach links oben) stabilisieren. Das Trägerelement 1 ist als ein im Wesentlichen flaches Bauteil ausgebildet, das sich in einer Erstreckungsebene E erstreckt. Die Erstreckungsebene E ist durch die beiden Haupt-Raumrichtungen x und y des Trägerelements gebildet, während sich in die dritte Raumrichtung z nur die Sicken 4 auswölben.

Das Trägerelement 1 ist durch zahlreiche Aussparungen 3, 5a, 5b, 5c, 5d in Form von Ausstanzungen bzw. Lochungen in seiner Erstreckung durchbrochen. Funktional ist dabei zu unterscheiden zwischen Einspritz-Aussparungen 3 und Funktions-Aussparungen 5a, 5b, 5c, 5d. Die Einspritz-Aussparungen 3 dienen dazu, Kunststofffunktionselemente am Trägerelement anzuspritzen und darin zu verankern. Dagegen dienen die Funktions-Aussparungen 5a, 5b, 5c ,5d im Wesentlichen dazu, mechanische Bewegungsfunktionen bzw. Befestigungsfunktionen einer aus dem Trägerelement 1 gebildeten Brüheinheit zu gewährleisten. Beispielweise ist die oben rechts dargestellte Aussparung 5a eine einfache Lochung, durch die ein Befestigungsstift geführt werden kann, mit dessen Hilfe das Trägerelement 1 an anderen Funktionseinheiten eines Kaffeeautomaten eingerastet werden kann. Die Funktionsaussparungen 5c, 5d dienen der Führung von beweglichen Elementen (nicht dargestellt), die dadurch eine Bewegungsrichtung erhalten. Die Aussparung 5b dient als Teil eines Lagers für eine nicht dargestellte rotierende Achse.

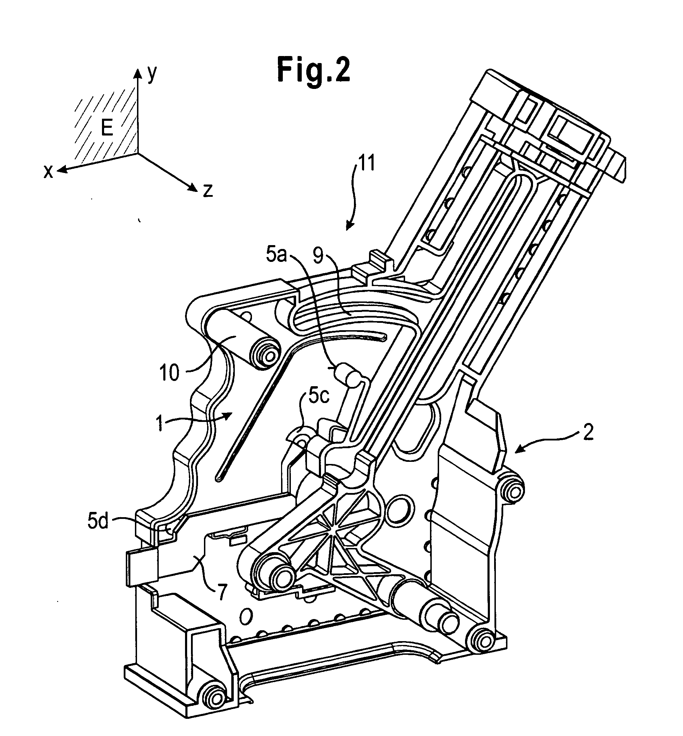

Figur 2 zeigt ein Formbauteil 11 zur Herstellung einer erfindungsgemäßen Brüheinheit. Es besteht aus dem Trägerelement 1 aus Figur 1 und Kunststofffunktionselementen 2. Sie sind in die Einspritz-Aussparungen 3 (vgl. Figur 1) des Trägerelements 1 eingespritzt und umgreifen auch seinen Rand, so dass ein gute Verankerung am Trägerelement 1 gewährleistet ist. Die Funktionselemente 2 sind aus einem besonders gleitfähigen Kunststoffmaterial gefertigt, beispielsweise aus Polyoxymethylen. Zu erkennen sind auch einige der Funktions-Aussparungen 5a, 5c, 5d. In der Funktions-Aussparung 5d ist ein beweglicher Schieber 7 eingelassen, der entlang der Erstreckungsrichtung der Funktions-Aussparung 5d bewegt werden kann.

Die Funktionselemente 2 bilden unter anderem die Teile einer Wandung einer Brüheinheit, die außerdem aus den Trägerelementen 1 besteht.. Die Funktionselemente 2 schließen die Brüheinheit teilweise in den Bereichen ab, in denen keine Trägerelemente 1 vorgesehen sind bzw. sie verbinden die Trägerelemente vollflächig, teilflächig oder punktuell. Außerdem umfassen die Funktionselemente Führungselemente 9 zur Bewegung eines Brühzylinders innerhalb der Brüheinheit und mehrere senkrecht aus der Erstreckungsebene E herausstehende Verbindungszylinder 10, mit deren Hilfe ein gegengleiches Bauteil wie das Formbauteil 11 (nicht abgebildet) mit dem Formbauteil 11 nach Einsetzen eines Brühzylinders zu einer Brüheinheit verbunden werden kann.

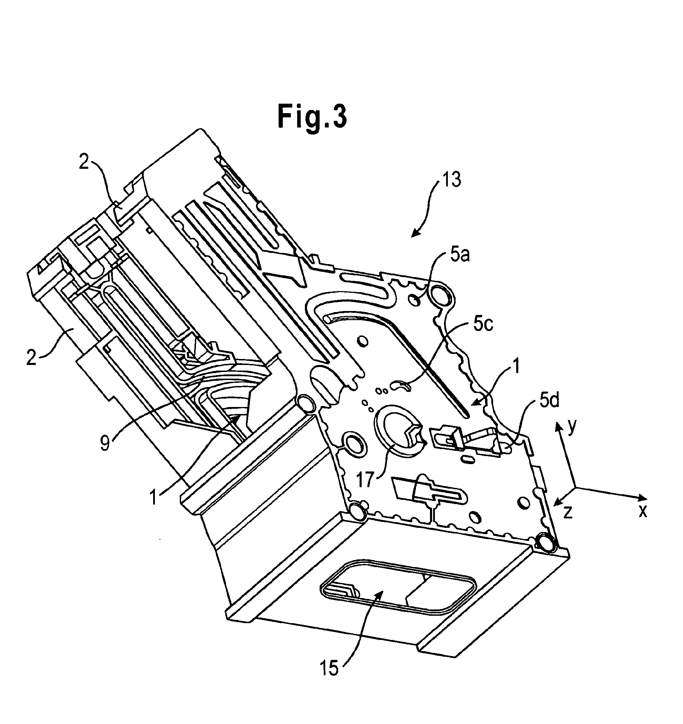

Figur 3 zeigt das fertig assemblierte Gehäuse einer Brüheinheit 13 der erfindungsgemäßen Art. Sie ist aus zwei Bauteilen 11 mit komplementär zueinander ausgebildeten und aufeinander zu ausgerichteten Funktionselementen 2 gebildet. Diese stehen von zwei parallel angeordneten Trägerelementen 1 ab. Durch ihre Verbindung an den Verbindungszylindern 10 (vgl. Figur 2) wird eine feste Einheit gebildet, die gleichzeitig ein Gehäuse ausbildet. In das Gehäuse kann eine Brühkammer beweglich eingebaut werden. Hierzu dienen insbesondere die Führungselemente 9. Zur Steuerung der Bewegung der Brühkammer kann von außerhalb des Gehäuses 13, beispielsweise über den Schieber 7 (vgl. Figur 2) eingewirkt werden. Im Trägerelement 1 ist im Bereich der Funktions-Aussparung 5b eine Manschette 17 aus Kunststoff angespritzt, innerhalb der eine Achse (nicht dargestellt) rotierend bewegt werden kann. Das Gehäuse der Brüheinheit 13 ist auf der Unterseite mit einer Öffnung 15 versehen, die durch entsprechende Formgebung der Funktionselemente 2 ausgebildet ist.

Da es sich bei den vorhergehenden, detailliert beschriebenen Elementen der Brüheinheit um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Funktionselemente in anderer Form als in der hier beschriebenen folgen. Ebenso kann das Trägerelement in einer anderen Form ausgestaltet werden, wenn dies aus Platzgründen bzw. designerischen oder funktionalen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

| | |
|---|---|
| 1 | Trägerelement |
| 2 | Funktionselemente |
| 3 | Einspritz-Aussparungen |
| 4 | Sicken |
| 5a, 5b, 5c, 5d | Funktions-Aussparungen |
| 7 | Schieber |
| 9 | Führungselemente |
| 10 | Verbindungszylinder |
| 11 | Formbauteil |
| 13 | Brüheinheit |
| 15 | Öffnung |
| 17 | Manschette |

| | |
|---|---|
| E | Erstreckungsebene |
| x, y, z | Raumrichtungen |

## Patentansprüche

1. Kaffeeautomat mit einem Automatengehäuse und einer darin angeordneten Brüheinhelt (13) als Funktionseinheit des Kaffeeautomaten mit mindestens zwei im Wesentlichen parallel angeordneten Trägerelementen (1) aus Metallblech und daran angeordneten Kunststofffunktionselementen (2), wobei die Kunststofffunktionselemente (2) an den Trägerelementen (1) angespritzt sind, und wobei die angespritzten Kunststofffunktionselemente (2) aufeinander zuweisen und komplementär zueinander ausgebildet sind.

2. Kaffeeautomat gemäß Anspruch 1, **gekennzeichnet durch** Aussparungen (3, 5a, 5b, 5c, 5d) im Trägerelement (1), in die Kunststofffunktionselemente (2) eingespritzt sind.

3. Kaffeeautomat gemäß einem der vorhergehenden Ansprüche, **dadurch gekennzeichnet, dass** das Trägerelement (1) aus seiner Erstreckungsebene (E) herausstehende Formelemente (4) aufweist.

4. Kaffeeautomat gemäß einem der vorhergehenden Ansprüche, **gekennzeichnet durch** Kunststofffunktionselemente (2) aus Polyoxymetylen und/oder Polycarbonat.

## Claims

1. Automatic coffee machine with an automatic machine housing and a brewing unit (13), which is arranged therein, as a functional unit of the automatic coffee machine, with at least two support elements (1) of sheet metal arranged substantially in parallel and plastics material functional elements (2) arranged thereat, wherein the plastics material functional elements (2) are injection-moulded on the support elements (1) and wherein the injection-moulded plastics material functional elements (2) face one another and are constructed to be complementary with one another.

2. Automatic coffee machine according to claim 1, **characterised by** cut-outs (3, 5a, 5b, 5c, 5d) in the support element (1) in which the plastics material functional elements (2) are injection moulded.

3. Automatic coffee machine according to one of the preceding claims, **characterised in that** the support element (1) has shaped elements (4) protruding out of its length plane (E).

4. Automatic coffee machine according to any one of the preceding claims, **characterised by** plastics material functional elements (2) of polyoxymethylene and/or polycarbonate.

## Revendications

1. Machine automatique à café avec un carter de machine et, placée dans celui-ci, une unité d'infusion (13) servant d'unité fonctionnelle de la machine automatique à café et comprenant au moins deux éléments de support (1) en tôle métallique sensiblement parallèles et des éléments fonctionnels plastiques (2) agencés sur ceux-ci, les éléments fonctionnels plastiques (2) étant moulés par injection sur les éléments de support (1), et les éléments fonctionnels plastiques (2) qui y sont moulés par injection étant tournés l'un vers l'autre et réalisés de manière complémentaire l'un à l'autre.

2. Machine automatique à café selon la revendication 1, **caractérisée par** des évidements (3, 5a, 5b, 5c, 5d) réalisés dans l'élément de support (1) et dans lesquels les éléments fonctionnels plastique (2) sont moulés par injection.

3. Machine automatique à café selon l'une des revendications précédentes, **caractérisée en ce que** l'élément de support (1) présente des éléments moulés (4) dépassant de son plan d'extension (E).

4. Machine automatique à café selon l'une des revendications précédentes, **caractérisée par** des éléments fonctionnels plastique (2) en polyoxyméthylène et/ou polycarbonate.
